# EUROPÄISCHE PATENTSCHRIFT

(11) **EP 2 052 918 B1**
(45) Veröffentlichungstag und Bekanntmachung des Hinweises auf die Patenterteilung: **08.08.2012**
(21) Anmeldenummer: 08018455.9
(22) Anmeldetag: 22.10.2008
(51) Int. Cl.: B60R 21/06

(54) **Zusammenlegbare Trenneinrichtung für ein Kraftfahrzeug**
Collapsible dividing device for a motor vehicle
Dispositif de séparation repliable pour un véhicule automobile

(30) Priorität: 23.10.2007 DE 102007052228
(43) Veröffentlichungstag der Anmeldung: 29.04.2009
(73) Patentinhaber: BOS GmbH & Co. KG, 73760 Ostfildern (DE)
(72) Erfinder: Seeg, Thomas, 73760 Ostfildern (DE)
(74) Vertreter: Patentanwälte Ruff, Wilhelm, Beier, Dauster & Partner

(56) Entgegenhaltungen:
- EP-B1- 1 125 800
- EP-B1- 1 128 992
- DE-C1- 10 055 353

## Beschreibung

Die Erfindung betrifft eine zusammenlegbare Trenneinrichtung für ein Kraftfahrzeug mit einem flexiblen Flächengebilde und mindestens einer mit dem Flächengebilde verbundenen oder mit dem Flächengebilde verbindbaren Haltestangen. Dabei weist die Haltestange mindestens zwei Teilstangen auf, die durch eine Schwenkeinrichtung miteinander verbunden sind. Die Schwenkeinrichtung ist dabei in einen Funktionszustand sowie in einen Schwenkzustand überführbar, wobei im Funktionszustand der Schwenkeinrichtung die Teilstangen miteinander fluchtend festgelegt sind und im Schwenkzustand der Schwenkeinrichtung die Teilstangen um eine Schwenkachse gegeneinander verschwenkbar sind.

Gattungsgemäße Trenneinrichtungen für Kraftfahrzeuge sind aus dem Stand der Technik bekannt. Sie dienen der Unterteilung des Fahrzeuginnenraums, insbesondere in einen Fahrgastbereich und einen Gepäckbereich. Die Haltestange, die über ihre gesamte Länge oder einen Teil ihrer Länge mit einem Rand des Flächengebildes verbunden ist, dient dem Zweck, das Flächengebilde an seinem vorgesehenen Ort zu halten und es gemeinsam mit einem weiteren Haltemittel auf der Gegenseite in einem gespannten Zustand zu halten. Gattungsgemäße Trenneinrichtungen weisen hierzu vorzugsweise zwei Haltestangen auf, wobei im Betrieb eine obere Haltestange vorzugsweise im Bereich des Dachhimmels und eine untere Haltestange auf Höhe der oberen Kante der Sitz oder weiter unten angeordnet ist. Diese beiden Haltestangen begrenzen das Flächengebilde beidseitig und sorgen dafür, dass das Flächengebilde an seiner vorgesehenen Position im Funktionszustand verbleibt.

Um die Trenneinrichtung platzsparend verstauen zu können, ist es aus dem Stand der Technik, beispielsweise aus der EP 11 25 800 B1, bekannt, die Haltestangen zweiteilig auszugestalten, wobei die beiden Teilstangen, die die Haltestangen bilden, ein verbindendes Gelenk aufweisen und dadurch V-artig zusammengelegt werden können. Die maximale Erstreckung der zusammengelegten Trenneinrichtung entspricht daher nur noch der halben Länge der Haltestangen im Funktionszustand. Um die beiden Teilstangen bei der Ausführungsform gegeneinander verschwenken zu können, muss eine Schiebehülse so verschoben werden, dass sie das verbindende Gelenk freigibt. Nachteilig an einer solchen Ausgestaltung ist, dass beim nachfolgenden Verschwenken der Teilstangen gegeneinander ein Einklemmen von Gliedmaßen des Bedieners zu befürchten ist.

Aus der EP 11 28 992 B1 ist eine gattungsgemäße Trenneinrichtung bekannt, bei der die Verriegelung ohne Schiebehülse lösbar ist, indem zunächst ein Verrieglungsbolzen, der den Funktionszustand sichert, durch einen Entriegelungsknopf in eine Freigabelage gedrückt wird. Anschließend können auch bei dieser Ausführungsform die Teilstangen gegeneinander gegeneinander verschwenkt werden, was wiederum eine Klemmgefahr mit sich bringt.

### Aufgabe und Lösung

Aufgabe der Erfindung ist es, eine gattungsgemäße Trenneinrichtung für ein Kraftfahrzeug dahingehend weiterzubilden, dass die Betriebssicherheit und die Handhabung verbessert werden.

Erfindungsgemäß wird dies dadurch erreicht dass bei einer gattungsgemäßen Trenneinrichtung die Schwenkeinrichtung derart ausgebildet ist, dass sie durch Kraftbeaufschlagung der Teilstangen aufeinander zu aus dem Funktionszustand in den Schwenkzustand überführbar ist, wobei erst durch diese Kraftbeaufschlagung die Schwenkbeweglichkeit der Teilstangen gegeneinander hergestellt wird.

Die Schwenkeinrichtung ist demnach so ausgebildet, dass sie in ihrem Funktionszustand die Teilstangen in einem zueinander fluchtenden Zustand hält. Um die Teilstangen aus dem Funktionszustand in den Schwenkzustand zu überführen, werden die Teilstangen aufeinander zu gedrückt. Erst hierdurch wird die Schwenkbeweglichkeit der Teilstangen gegeneinander hergestellt. Da diese Betätigung, an die sich das eigentliche Verschwenken anschließt, im Normalfall mittels zweier Hände realisiert wird, ist die Gefahr des Einklemmens einer Hand sehr gering. Vorteilhaft ist es weiterhin, dass diese Überführung in den Schwenkzustand kaum unbeabsichtigt durch eine Crashsituation hervorgerufen werden kann. In einer solchen Crashsituation, in der das Trennnetz dem Auffangen von Gepäck dient, werden die Teilstangen stattdessen durch die Belastung des flexiblen Flächengebildes auf Zug belastet. Es ist demnach nicht zu befürchten, dass die Teilstangen bei einer erfindungsgemäßen Ausgestaltung im Crashfalle durch einen ungewollt erzielten Schwenkzustand die bestimmungsgemäße Funktion der Trenneinrichtung nicht mehr gewährleisten können. Die Teilstangen können insbesondere als metallische Hohlrohre ausgebildet sein. Es sind jedoch auch andere stabförmige Bauteile wie Stangenprofile verwendbar. Die Schwenkeinrichtung muss nicht als separates Bauteil gebildet sein, sondern kann durch miteinander schwenkbar verbundene einstückig angeformte Enden der Teilstangen gebildet werden. Besonders vorteilhaft ist es unter Sicherheitsgesichtspunkten sowie ästhetischen Erwägungen, wenn die Schwenkeinrichtung durch eine Kunststoffkappe oder ein Kunststoffgehäuse verdeckt ist.

Bei einer Weiterbildung der Erfindung sind zwei Haltestangen mit je zwei Teilstangen vorgesehen, wobei die Haltestangen an gegenüberliegenden oberen und unteren Enden des flexiblen Flächengebildes parallel zueinander angeordnet sind. Die Haltestangen weisen dabei jeweils eine Schwenkeinrichtung auf und können somit jeweils in einen Schwenkzustand überführt werden, in dem die Teilstangen in eine V-Lage mit vermindertem Platzbedarf gebracht werden können. Nach Überführen beider Haltestangen in diesen platzsparenden Stauzustand kann die Trenneinrichtung unter Aufwicklung des flexiblen Flächengebildes verpackt werden.

Bei einer Weiterbildung der Erfindung werden die zwei Teilstangen der Haltestange im Funktionszustand durch ein Federmittel in einer Richtung voneinander weg kraftbeaufschlagt. Hierdurch werden die Teilstangen der Haltestange im Funktionszustand gehalten, bis durch manuelles Einwirken entgegen der Federkraft der Federmittel die Haltestange in ihren Schwenkzustand überführt wird. Die Federmittel sind vorzugsweise derart ausgebildet, dass sie eine Feder umfassen, die fest mit einer ersten Teilstange oder einem dieser ersten Teilstange zugeordneten Abschnitt verbunden ist und sich an dieser ersten Teilstange oder diesem Abschnitt abstützt. An einer zweiten Teilstange oder einem der zweiten Teilstange zugeordneten Abschnitt ist vorzugsweise eine Angriffsfläche vorgesehen, gegen die das Federmittel oder ein durch das Federmittel kraftbeaufschlagte Flächenabschnitt im Funktionszustand durch die Federkraft gedrückt wird.

Bei einer Weiterbildung der Erfindung weist die Schwenkeinrichtung zwei Schwenkeinrichtungsabschnitte auf, wobei jeder Schwenkeinrichtungsabschnitt mit einer Teilstange der Haltestange fest verbunden ist und wobei die Schwenkeinrichtungsabschnitte im Funktionszustand formschlüssig ineinander greifen. Der Formschluss im Funktionszustand gewährleistet eine hohe Stabilität.

Bei einer Weiterbildung der Erfindung weist ein erster Schwenkeinrichtungsabschnitt eine Ausnehmung auf und ein zweiter Schwenkeinrichtungsabschnitt einen in die Ausnehmung eingreifenden Fortsatz auf, wobei die Ausnehmung einen Fixierabschnitt aufweist, innerhalb dessen der Fortsatz drehfest gesichert ist, und einen Drehabschnitt aufweist, innerhalb dessen der Fortsatz um die Schwenkachse drehbar ist. Die Ausnehmung ist also in mindestens zwei Bereiche unterteilt, die sich bezüglich ihrer Maße unterscheiden und dadurch eine unterschiedliche Beweglichkeit des Fortsatzes in den jeweiligen Abschnitten ermöglichen. Im Funktionszustand der Haltestange ist der Fortsatz im Fixierabschnitt angeordnet. Er ist dadurch in seiner Beweglichkeit eingeschränkt und vorzugsweise lediglich in Erstreckungsrichtung der Haltestange auf die die Ausnehmung aufweisende Teilstange zu beweglich. In dieser Richtung schließt sich an den Fixierabschnitt der Drehabschnitt an, innerhalb dessen der Fortsatz drehbeweglich ist. Vorzugsweise sind dabei sowohl der Fixierabschnitt der Ausnehmung als auch der Drehabschnitt der Ausnehmung derart an den Fortsatz angepasst, dass der Fortsatz in keinem der Abschnitte werkzeuglos aus der Ausnehmung entfernbar ist.

Bei einer Weiterbildung der Erfindung sind die Schwenkeinrichtungsabschnitte mittels Führungsmitteln gegeneinander beweglich, wobei die Führungsmittel für eine U-förmige Bewegung eines ersten Schwenkeinrichtungsabschnitts gegenüber einem zweiten Schwenkeinrichtungsabschnitt ausgebildet sind. Die Bewegung folgt dabei sowohl translativ als auch rotativ der U-Form, so dass im Bereich des U-Bogens ein Verschwenken des einen Schwenkeinrichtungsabschnitts und damit der verbundenen Teilstange gegenüber dem anderen Schwenkeinrichtungsabschnitt und der damit verbundenen Teilstange erfolgt. Das Führungsmittel umfasst vorzugsweise eine U-förmige Ausnehmung, in die ein darin geführter Fortsatz hineinreicht. Dieser Fortsatz kann innerhalb der Ausnehmung nur translativ bewegt werden, jedoch bei gleich bleibender Position in der Ausnehmung nicht verschwenkt werden. Der Fortsatz besteht vorzugsweise seinerseits aus zwei voneinander beabstandeten parallelen Zylinderabschnitten.

Bei einer Weiterbildung der Erfindung weist die Schwenkeinrichtung ein Sicherungsmittel auf, welches zum Zweck des Verschwenkens der Teilstangen lösbar ist. Die Sicherungseinrichtung kann insbesondere auch derart ausgebildet sein, dass nach Überführen der Schwenkeinrichtung in den Schwenkzustand, also nach Aufeinanderzubewegen der Teilstangen, zum tatsächlichen Verschwenken ein durch die Sicherungseinrichtung hervorgerufener Widerstand überwunden werden muss. Hierdurch wird verhindert, dass nach Zusammendrücken der Teilstangen die dafür aufgewendete Kraft unmittelbar zu einem Verschwenken der Teilstangen gegeneinander führt.

Besonders vorteilhaft ist dabei eine Ausgestaltung, bei der die Federmittel zur Kraftbeaufschlagung eines Sicherungsstifts ausgebildet sind und sich an einer erste Teilstange oder einem mit dieser verbundenen ersten Schwenkeinrichtungsabschnitt abstützen. Dabei ist an einer zweiten Teilstange oder einem mit ihr verbundenen Schwenkeinrichtungsabschnitt eine Ausnehmung zur Aufnahme des Sicherungsstifts vorgesehen.

### Kurzbeschreibung der Zeichnungen

Weitere Merkmale und Vorteile der Erfindung ergeben sich außer aus den Ansprüchen auch aus der nachfolgenden Beschreibung bevorzugter Ausführungsbeispiele der Erfindung. Dabei zeigen:
- Fig. 1: eine erfindungsgemäße Trenneinrichtung in einer Gesamtdarstellung in ihrem Funktionszustand,
- Fig. 2a bis 2d: die Schwenkeinrichtung der Trenneinrichtung der Fig. 1 in verschiedenen Zuständen bei der Überführung aus dem Funktionszustand in einen Schwenkzustand und nachfolgend in einen Stauzustand sowie
- Fig. 3a bis 3d: eine Schwenkeinrichtung einer zweiten Ausführungsform einer erfindungsgemäßen Trenneinrichtung in verschiedenen Zustanden bei der Überführung aus einem Funktionszustand in einen Schwenkzustand und nachfolgend in einen Stauzustand.

### Detaillierte Beschreibung der Ausführungsbeispiele

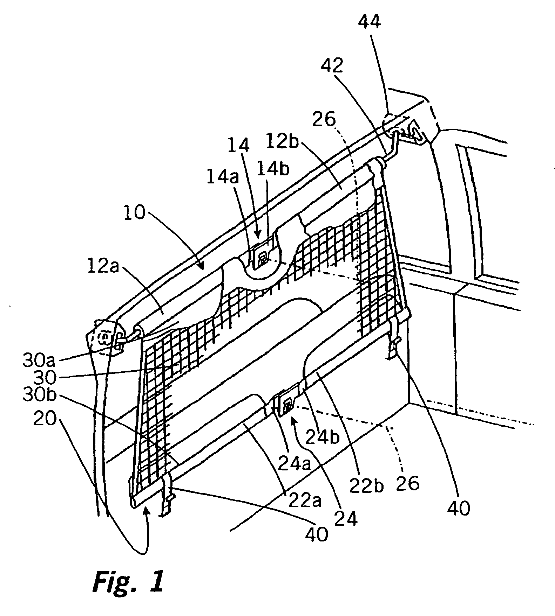

Fig. 1 zeigt eine erfindungsgemäße Trenneinrichtung eines Fahrzeugs in einer Gesamtdarstellung im Funktionszustand. Die Trenneinrichtung umfasst eine obere Haltestange 10 und eine untere Haltestange 20. Zwischen den Haltestangen 10, 20 ist ein Trennnetz 30 vorgesehen, welches im Bereich seines oberen Endes 30a an der oberen Haltestange 10 festgelegt ist und im Bereich seines unteren Endes 30b durch die untere Haltestange 20 befestigt ist. Die untere Haltestange ist im dargestellten Funktionszustand auf Höhe einer oberen Lehnenkante der Fondsitze mittels nicht im Detail dargestellter Gurte 40 festgelegt. Die obere Haltestange 10 ist durch Fortsätze 42 in fahrzeugfesten Aufnahmen 44 im Bereich des Dachhimmels festgelegt.

Die beiden Teilstangen 10, 20 weisen jeweils zwei Teilstangen 12a, 12b, 22a, 22b auf. Die Teilstangen 12a, 12b der Haltestange 10 sowie die Teilstangen 22a, 22b der Haltestange 20 sind jeweils über eine Schwenkeinrichtung 14, 24 miteinander verbunden. Diese umfasst je einen Schwenkeinrichtungsabschnitt 14a, 14b, 24a, 24b zu jeder Teilstange 12a, 12b, 22a, 22b. Die Schwenkeinrichtungsabschnitte 14a, 14b, 24a, 24b der beiden Haltestangen 10, 20 gestatten nach einer axialen Verkürzung der jeweiligen Haltestange 10, 20 ein Verschwenken um Schwenkachsen 16, 26. Sie erlauben es damit, die in Fig. 1 dargestellte Trenneinrichtung in einen platzsparenden Zustand zu überführen.

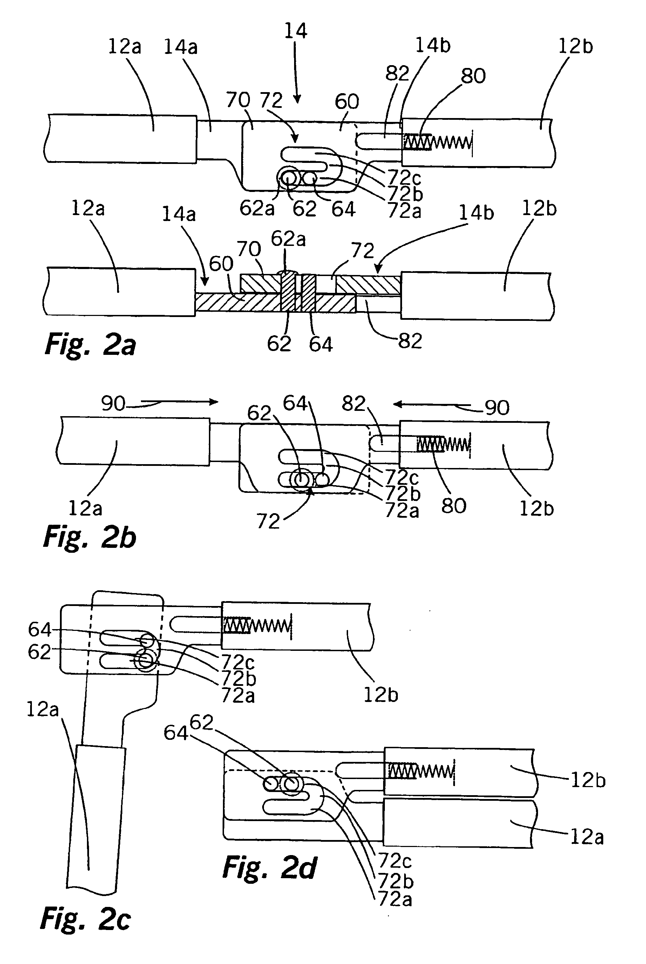

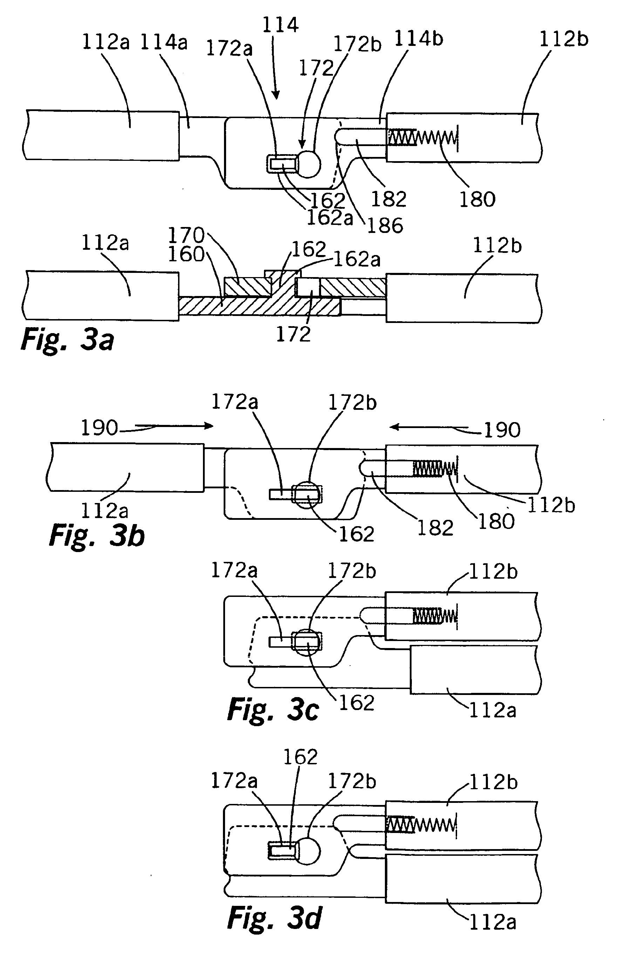

Im Detail sind zwei Schwenkeinrichtungen in den Fig. 2a bis 2d und 3a bis 3d dargestellt.

Die Fig. 2a bis 2d zeigen eine erste Ausführungsform einer Schwenkeinrichtung, wobei es sich bei der Ausführungsform und die der Fig. 1 handelt. Fig. 2a zeigt dabei die Schwenkeinrichtung 14 im Funktionszustand in zwei Perspektiven. Die Schwenkeinrichtung 14 umfasst die beiden genannten Schwenkeinrichtungsabschnitte 14a, 14b, die jeweils mit einem der beiden Teilstangen 12a, 12b fest, insbesondere einstückig, verbunden sind. Als Hauptkomponente weisen die Schwenkeinrichtungsabschnitte 14a, 14b jeweils einen Flächenabschnitt 60, 70 auf, wobei im Funktionszustand der Fig. 2a die Flächenabschnitte überlappend aufeinander liegen. Im Flächenabschnitt 70 ist eine U-förmige Durchbrechung 72 vorgesehen. Im Flächenabschnitt 60 sind zwei zylindrische Stifte 62, 64 mittels jeweils einer Pressverbindung befestigt, die sich in die U-förmige Ausnehmung 72 des Flächenabschnitts 70 erstrecken. Der Stift 62 weist dabei an seinem oberen Ende eine Aufweitung 62a auf, die verhindert, dass der Stift 62 aus der Ausnehmung 72 herausrutschen kann. Im Funktionszustand der Fig. 2a sind die beiden Stifte in einem ersten Schenkel 72a der U-förmigen Durchbrechung 72 angeordnet. Aufgrund der Ausgestaltung mit zwei Stiften kann ein Verschwenken der Teilstangen 12a, 12b in diesem Zustand nicht erfolgen. Durch einen mittels einer Feder 80 federbelasteten Stift 82, der sich an der Teilstange 12b abstützt, werden die Teilstangen 12a, 12b voneinander weggedrückt und die Stifte 62, 64 im ersten Schenkel 72a der U-förmigen Durchbrechung 72 gehalten. Zu diesem Zweck drückt der Stift 82 auf den Schwenkeinrichtungsabschnitt 14a der Teilstange 14.

Um die beiden Teilstangen gegeneinander verschwenken zu können, werden sie, wie in Fig. 2b dargestellt ist, in Richtung der Pfeile 90 aufeinander zu bewegt. Hierdurch verschieben sich die Stifte 62, 64 aus dem Schenkel 72a der U-förmigen Ausnehmung 72 bis in einen Bogenabschnitt 72b. Dies geschieht entgegen der Federkraft der Feder 80 durch die manuelle Kraftbeaufschlagung der Teilstangen 12a, 12b. Sobald die Stifte 62, 64 diesen bogenförmigen Abschnitt 72b erreicht haben, können sie dem Bogen folgend weiterbewegt werden, wobei es zu einem Verschwenken der Teilstangen 12a, 12b gegeneinander kommt. Diese Schwenkbewegung wird erst dadurch unterbunden, dass die Teilstangen 12a, 12b, wie in Fig. 2d dargestellt ist, aneinander zum Anliegen kommen. Die Stifte 62, 64 befindet sich dann in den zweiten Schenkel 72c der U-förmigen Ausnehmung.

Die Ausführungsform der Fig. 3a bis 3d ist ähnlich aufgebaut. Sie unterscheidet sich jedoch im Hinblick auf die Ausgestaltung der Schwenkeinrichtungsabschnitte 114a, 114b. Bei dieser zweiten Ausführungsform ist im Schwenkeinrichtungsabschnitt 114b eine Ausnehmung 172 vorgesehen, die in etwa die Form eines Schlüssellochs aufweist. Diese Ausnehmung 172 umfasst einen länglichen Fixierabschnitt 172a und einen runden Drehabschnitt 172b. In der Ausnehmung 172 ist ein Fortsatz 162 angeordnet, der einstückig am Flächenabschnitt 160 des anderen Schwenkeinrichtungsabschnitts 114a angeformt ist. Diese Fortsatz 162 erstreckt sich durch die Durchbrechung einer 172 hindurch und ist durch eine angeformte Aufweitung 162a daran gehindert, aus der Ausnehmung 172 herauszurutschen.

Anders als bei der Ausgestaltung der Fig. 2a bis 2d führt diese Ausgestaltung nicht zu einer Zwangsführung der Teilstangen zueinander, sondern gestattet nach Überführung des Fortsatzes 162 bis in den Drehabschnitt 172b durch Zusammendrücken der Teilstangen 112a, 112b aufeinander zu in Richtung der Pfeile 190 ein freies Verschwenken der Teilstangen 112a, 112b gegeneinander. Dieses Verschwenken ist in der Fig. 3c dargestellt. Beim Zusammendrücken wird wie bei der Ausführungsform der Fig. 2a bis 2d ebenfalls ein Federstift 182 entgegen einer Federkraft einer Feder 180 ausgelenkt. Diese Federkraft der Feder 180 hat die primäre Funktion, die Teilstangen 112a, 112b in der Stellung der Fig. 3a zu halten. Nach Erreichen der zusammengedrückten Stellung der Fig. 3b entgegen der Federkraft der Feder 180 übernimmt diese Feder 180 gemeinsam mit dem Federstift 182 und einer Ausnehmung 186 am Schwenkeinrichtungsabschnitte 114a zusätzlich die Funktion, einen leichten Widerstand gegen das Verschwenken der Teilstangen 112a, 112b zu bewirken. Dadurch wird verhindert, dass die manuell aufgebrachte Kraft zum Zusammendrücken der Teilstangen 112a, 112b in ungewollter Art und Weise anschließend unmittelbar auch ein Verschwenken der Teilstangen bewirkt.

Wie in Fig. 3d dargestellt ist, kann der Fortsatz 162 nach dem Verschwenken um 180° wieder in den Fixierabschnitt 172a der Ausnehmung 172 eingeschoben werden, wodurch wiederum eine Sicherung gegen Verschwenken der Teilstangen erzielt wird, diesmal jedoch in einem platzsparenden Stauzustand.

Die Handhabung der dargestellten Trenneinrichtungen erfolgt jeweils, indem die Teilstangen 12a, 12b, 112a, 112b mit jeweils einer Hand des Bedieners erfasst werden, dann aufeinander zu gedrückt und anschließend verschwenkt werden. Die Gefahr, dass der Benutzer sich dabei versehentlich Gliedmaßen, insbesondere Finger, im Bereich der Schwenkeinrichtungen 14, 114 einklemmt, ist gering.

## Patentansprüche

1. Zusammenlegbare Trenneinrichtung für ein Kraftfahrzeug mit
- einem flexiblen Flächengebilde (30),
- mindestens einer mit dem Flächengebilde verbundenen oder mit dem Flächengebilde verbindbaren Haltestange (10, 20),
wobei
- die Haltestange (10, 20) mindestens zwei Teilstangen (12a, 12b, 22a, 22b; 112a, 112b) aufweist, die durch eine Schwenkeinrichtung (14, 24; 114) miteinander verbunden sind,
- die Schwenkeinrichtung (14, 24; 114) in einen Funktionszustand sowie einen Schwenkzustand überführbar ist,
- im Funktionszustand der Schwenkeinrichtung (14, 24; 114) die Teilstangen (12a, 12b, 22a, 22b; 112a, 112b) miteinander fluchtend festgelegt sind,
- im Schwenkzustand der Schwenkeinrichtung (14, 24; 114) die Teilstangen (12a, 12b, 22a, 22b; 112a, 112b) um eine Schwenkachse gegeneinander verschwenkbar sind,
**dadurch gekennzeichnet, dass**
- die Schwenkeinrichtung (14, 24; 114) durch Kraftbeaufschlagung der Teilstangen (12a, 12b; 112a, 112b) aufeinander zu aus dem Funktionszustand in den Schwenkzustand überführbar ist, wobei erst durch diese Kraftbeaufschlagung die Schwenkbeweglichkeit der Teilstangen gegeneinander hergestellt wird.

2. Zusammenlegbare Trenneinrichtung für ein Kraftfahrzeug nach Anspruch 1,
**gekennzeichnet durch**
zwei Haltestangen (10, 20) mit je zwei Teilstangen (12a, 12b, 22a, 22b) wobei die Haltestangen (10, 20) an gegenüberliegenden oberen und unteren Enden (30a, 30b) des flexiblen Flächengebildes (30) parallel zueinander angeordnet sind.

3. Zusammenlegbare Trenneinrichtung nach einem der vorstehenden Ansprüche,
**dadurch gekennzeichnet, dass**
- die zwei Teilstangen (12a, 12b; 112a, 112b) der Haltestange im Funktionszustand durch ein Federmittel (80; 180) in eine Richtung voneinander weg kraftbeaufschlagt werden.

4. Zusammenlegbare Trenneinrichtung nach einem der vorstehenden Ansprüche,
**dadurch gekennzeichnet, dass**
die Schwenkeinrichtung (14; 114) zwei Schwenkeinrichtungsabschnitte (14a, 14b; 114a, 114b) aufweist, wobei jeder Schwenkeinrichtungsabschnitt (14a, 14b; 114a, 114b) mit einer Teilstange (12a, 12b; 112a, 112b) der Haltestange (10) fest verbunden ist und wobei die Schwenkeinrichtungsabschnitte (14a, 14b; 114a, 114b) im Funktionszustand formschlüssig ineinandergreifen.

5. Zusammenlegbare Trenneinrichtung nach Anspruch 4,
**dadurch gekennzeichnet, dass**
ein erster Schwenkeinrichtungsabschnitt (114b) eine Ausnehmung (172) aufweist und ein zweiter Schwenkeinrichtungsabschnitt (114a) einen in die Ausnehmung eingreifenden Fortsatz (162) aufweist, wobei die Ausnehmung (172) einen Fixierabschnitt (172a) aufweist, innerhalb dessen der Fortsatz (162) drehfest gesichert ist, und einen Drehabschnitt (172b) aufweist, innerhalb dessen der Fortsatz (162) um die Schwenkachse drehbar ist.

6. Zusammenlegbare Trenneinrichtung nach Anspruch 4,
**dadurch gekennzeichnet, dass**
die Schwenkeinrichtungsabschnitte mittels Führungsmitteln (72) gegeneinander beweglich sind, wobei die Führungsmittel (72) für eine U-förmige Bewegung eines ersten Schwenkeinrichtungsabschnitts (12a) gegenüber einem zweiten Schwenkeinrichtungsabschnitt (12b) ausgebildet sind.

7. Zusammenlegbare Trenneinrichtung nach einem der vorstehenden Ansprüche,
**dadurch gekennzeichnet, dass**
die Schwenkeinrichtung (114) ein Sicherungsmittel (182, 186) aufweist, welches zum Zweck des Verschwenkens der Teilstangen (112a, 112b) lösbar ist.

8. Zusammenlegbare Trenneinrichtung nach Anspruch 7,
**dadurch gekennzeichnet, dass**
- die Federmittel (180) zur Kraftbeaufschlagung eines Sicherungsstifts (182) ausgebildet sind und sich an einer ersten Teilstange (112b) oder einem mit ihr verbundenen ersten Schwenkeinrichtungsabschnitt (114b) abstützen und
- an einer zweiten Teilstange (112a) oder einem mit ihr verbundenen Schwenkeinrichtungsabschnitt (114a) eine Ausnehmung (186) zur Aufnahme des Sicherungsstifts (182) vorgesehen ist.

## Claims

1. Fold-up separating device for a motor vehicle having
- a flexible planar structure (30),
- at least one holding bar (10, 20) connected to said planar structure or connectable to said planar structure,
where
- the holding bar (10, 20) has at least two part-bars (12a, 12b, 22a, 22b; 112a, 112b) connected to one another by a swivel device (14, 24; 114),
- the swivel device (14, 24; 114) can be transformed into an operating state and into a swivelling state,
- in the operating state of the swivel device (14, 24; 114) the part-bars (12a, 12b, 22a, 22b; 112a, 112b) are fixed in alignment with one another,
- in the swivelling state of the swivel device (14, 24; 114) the part-bars (12a, 12b, 22a, 22b; 112a, 112b) can be swivelled relative to one another about a swivel axis,
**characterized in that**
- the swivel device (14, 24; 114) can be transformed from the operating state to the swivelling state by applying force to the part-bars (12a, 12b; 112a, 112b) towards one another, where the swivellability of the part-bars relative to one another is only achieved by this application of force.

2. Fold-up separating device for a motor vehicle according to Claim 1,
**characterized by**
two holding bars (10, 20) each with two part-bars (12a, 12b, 22a, 22b), where said holding bars (10, 20) are arranged parallel to one another at opposite upper and lower ends (30a, 30b) of the flexible planar structure (30).

3. Fold-up separating device according to one of the preceding claims,
**characterized in that**
- the two part-bars (12a, 12b, 112a, 112b) of the holding bar are subjected to a force in the operating state by a spring means (80; 180) in a direction away from one another.

4. Fold-up separating device according to one of the preceding claims,
**characterized in that**
the swivel device (14, 114) has two swivel device sections (14a, 14b; 114a, 114b), where each swivel device (14a, 14b; 114a, 114b) is firmly connected to a part-bar (12a, 12b, 112a, 112b) of the holding bar (10) and where the swivel device sections (14a, 14b; 114a, 114b) engage positively with one another in the operating state.

5. Fold-up separating device according to Claim 4,
**characterized in that**
a first swivel device section (114b) has a recess (172) and a second swivel device section (114a) has a projection (162) engaging in said recess, where the recess (172) has a fixing section (172a) inside which the projection (162) is non-rotatably secured and has a rotation section (172b) inside which the projection (162) is rotatable about the swivel axis.

6. Fold-up separating device according to Claim 4,
**characterized in that**
the swivel device sections are movable relative to one another by guide means (72), where said guide means are designed for a U-shaped movement of a first swivel device section (12a) relative to a second swivel device section (12b).

7. Fold-up separating device according to one of the preceding claims,
**characterized in that**
the swivel device (114) has a securing means (182, 186) which is detachable for the purpose of swivelling the part-bars (112a, 112b).

8. Fold-up separating device according to Claim 7,
**characterized in that**
- the spring means (180) are designed for applying a force to a securing pin (182) and brace against a first part-bar (112b) or against a first swivel device section (114b) connected thereto and
- a recess (186) is provided for receiving the securing pin (182) on a second part-bar (112a) or on a swivel device section (114a) connected thereto.

## Revendications

1. Dispositif de séparation repliable pour un véhicule automobile, comprenant
- une structure plane souple (30),
- au moins une barre de fixation (10, 20) reliée à la structure plane ou pouvant être reliée à la structure plane,
sachant que
- la barre de fixation (10, 20) présente au moins deux barres partielles (12a, 12b, 22a, 22b ; 112a, 112b) qui sont reliées entre elles par un dispositif de pivotement (14, 24 ; 114),
- le dispositif de pivotement (14, 24 ; 114) peut être amené dans un état fonctionnel ainsi que dans un état de pivotement,
- dans l'état fonctionnel du dispositif de pivotement (14, 24 ; 114), les barres partielles (12a, 12b, 22a, 22b ; 112a, 112b) sont fixées de manière alignées entre elles,
- dans l'état de pivotement du dispositif de pivotement (14, 24 ; 114), les barres partielles (12a, 12b, 22a, 22b ; 112a, 112b) peuvent être pivotées l'une par rapport à l'autre autour d'un axe de pivotement,
**caractérisé en ce**
- **que** le dispositif de pivotement (14, 24 ; 114) peut être commuté de l'état fonctionnel à l'état de pivotement par application d'une force sur les barres partielles (12a, 12b ; 112a, 112b) les rapprochant l'une de l'autre, sachant que la mobilité par pivotement des barres partielles entre elles n'est obtenue que suite à cette application de force.

2. Dispositif de séparation repliable pour un véhicule selon la revendication 1,
**caractérisé par**
deux barres de fixation (10, 20) comprenant chacune deux barres partielles (12a, 12b, 22a, 22b), les barres de fixation (10, 20) étant disposées parallèlement entre elles aux extrémités supérieure et inférieure opposées (30a, 30b) de la structure plane souple (30).

3. Dispositif de séparation repliable selon l'une des revendications précédentes,
**caractérisé en ce**
- **que** dans l'état fonctionnel, les deux barres partielles (12a, 12b ; 112a, 112b) de la barre de fixation sont soumises à une force par un élément à ressort (80 ; 180) dans un sens tendant à les écarter l'une de l'autre.

4. Dispositif de séparation repliable selon l'une des revendications précédentes,
**caractérisé en ce**
**que** le dispositif de pivotement (14 ; 114) présente deux parties de dispositif de pivotement (14a, 14b ; 114a, 114b), sachant que chaque partie de dispositif de pivotement (14a, 14b ; 114a, 114b) est reliée fixement à une barre partielle (12a, 12b ; 112a, 112b) de la barre de fixation (10), et que dans l'état fonctionnel, les parties de dispositif de pivotement (14a, 14b ; 114a, 114b) s'engagent l'une dans l'autre par complémentarité de forme.

5. Dispositif de séparation repliable selon la revendication 4,
**caractérisé en ce**
**qu'**une première partie de dispositif de pivotement (114b) présente un évidement (172) et une seconde partie de dispositif de pivotement (114a) présente un appendice (162) qui s'engage dans l'évidement, sachant que l'évidement (172) présente une section de fixation (172a), à l'intérieur de laquelle l'appendice (162) est fixé de manière assurée contre la rotation, et une section de rotation (172b), à l'intérieur de laquelle l'appendice (162) peut pivoter autour de l'axe de pivotement.

6. Dispositif de séparation repliable selon la revendication 4,
**caractérisé en ce**
**que** les parties de dispositif de pivotement sont mobiles l'une par rapport à l'autre au moyen d'éléments de guidage (72), sachant que les éléments de guidage (72) sont conçus pour un mouvement en U d'une première partie de dispositif de pivotements (12a) par rapport à une seconde partie de dispositif de pivotement (12b).

7. Dispositif de séparation repliable selon l'une des revendications précédentes,
**caractérisé en ce**
**que** le dispositif de pivotement (114) présente un moyen d'arrêt (182, 186) qui peut être débloqué pour permettre le pivotement des barres partielles (112a, 112b).

8. Dispositif de séparation repliable selon la revendication 7,
**caractérisé en ce**
- **que** les éléments à ressort (180) sont conçus pour appliquer une force sur un goujon d'arrêt (182) et s'appuient sur une première barre partielle (112b) ou sur une première partie de dispositif de pivotement (114b) reliée à ladite barre et
- **que** sur une seconde barre partielle (112a) ou sur une partie de dispositif de pivotement (114a) reliée à ladite barre est prévu un évidement (186) destiné à recevoir le goujon d'arrêt (182).
